# EUROPEAN PATENT APPLICATION

(11) **EP 1 420 340 A1**
(43) Date of publication of application: **19.05.2004**
(21) Application number: 02354178.2
(22) Date of filing: 15.11.2002
(51) Int. Cl.: G06F 9/46

(54) **Remote object invocation system and method**

(71) Applicant: Hewlett-Packard Company, Palo Alto, CA 94304 (US)
(72) Inventor: Cioccarelli, Dominic, Mosman NSW 2088 (AU)
(74) Representative: Lloyd, Richard Graham

(57) **Abstract**

Embodiments of the present invention relates to a data processing system and method and more particularly, to dynamic remote object invocation via which remote objects can be instantiated and invoked at run time. The embodiments provide a significantly simpler solution to remote object invocation as compared to, for example, CORBA. The embodiments of the present invention exploit introspection to identify the methods and properties of an object. It will be appreciated that the use of introspection carries the significant advantage that the methods and properties of an object do not need to be defined via an interface description language and do not need to be processed via an interface description language compiler to produce methods that can be used by a client. Furthermore, in some embodiments, the use of introspection, preferably each time an object is instantiated, assists in ensuring, in the event of an object having changed, that the introspected methods and properties represent the most up to date form of the object. Suitably, an object interface can be readily changed without a developer having to recompile and re-link interface description language stubs and skeletons as is the case with the prior art common object request broker architecture.

## Description

### Field of the Invention

The present invention relates to a remote object invocation system and method and, more particularly, to a distributed object computing system and method.

### Background to the Invention

There are several trends that are currently shaping the commercial development of software. These trends, firstly, include a movement by the software industry away from developing programming applications from scratch to the collation of reusable software components. Secondly, due to the ubiquitous nature of the Internet and the services provided by the Internet, such as, for example, video on demand, teleconferencing etc, there is an increased demand for distributed processing that accommodates remote method invocation and messaging to simplify collaboration between client applications and server applications. Furthermore, part of the integration of reusable software components involves the development of software standards for the integration of heterogeneous environments. Finally, the applications of distributed processing mentioned above often require a guaranteed quality of service in terms of latency, bandwidth and reliability.

In light of these requirements, there is an increasing trend towards distributed object computing (DOC) and associated middleware. DOC middleware facilitates integration and collaboration between local and remote application objects or components within a heterogeneous distributed environment. One of the aims of distributed object computing is to mitigate adverse consequences of the often tedious, error-prone and non-portable aspects of developing and evolving distributed applications and services.

Distributed object computing environments are, at least in part, directed to automating network programming tasks such as, for example, object location, implementation start-up, that is, server and object activation, encapsulation of byte-ordering and parameter type size differences across dissimilar architectures (parameter marshalling) as well as recovery and security.

An example of a distributed object computing architecture is the Common Object Request Broker Architecture (CORBA). CORBA object request brokers allow clients to invoke operations on distributed objects without concern for the above technical issues.

Although there are many remote procedure or remote method technologies such as, for example, CORBA, DOC, RIM, RPC and DCOM, a significant drawback of the above architectures or protocols is that they are conceptually difficult. One skilled in the art appreciates that there are conceptual difficulties in going from a single process, single machine development cycle to the implementation of applications that span a distributed architecture.

Architectures such as CORBA have a complex nature and lack flexibility. In particular, interfaces for remote objects are defined by, and must comply with, a particular grammar, that is, an interface description language (IDL). The IDL is used to define stubs and skeletons for use by the client and server respectively. The creation of an IDL skeleton requires an IDL compiler. It will be appreciated that the resulting compiled entities are static and cannot reflect, dynamically, any change to the underlying object from which the compiled IDL was derived.

The lack of flexibility and the associated complexity of existing remote object invocation architectures is hampering the development of distributed applications.

It can be appreciated that there is a need within the art for a distributed protocol or architecture that is relatively simple, from a conceptual perspective, to implement and that avoids the complexities associated with existing architectures and protocols such as, for example, CORBA.

It is an object of the present invention at least to mitigate some of the problems of the prior art.

### Summary of Invention

Accordingly, a first aspect of embodiments of the present invention provides a remote object invocation method for invoking a method of a remote object; the method comprising the steps of producing remote object data associated with the remote object; interpretatively establishing a proxy object using the remote object data; the proxy object bearing an associated proxy method corresponding to the method of remote object; invoking, in response to an action of client software, the proxy method; conveying invocation data associated with the invocation of the proxy method to the remote object; invoking, in response to the invocation data, the method of the remote object; and returning invocation result data to the client software via the proxy object.

It will be appreciated that the combination of producing remote object data and interpreting that data affords significant flexibility in changing or updating objects to be realised, that is, such changes or updates can be accommodated.

Preferably, embodiments provide a method in which the step of producing the remote object data comprises the step of introspecting the remote object to produce introspection data and in which the remote object method data comprises the introspection data produced by said introspecting.

Advantageously, since the process of introspection is used, the embodiments of the invention are more flexible as an IDL definition never needs to be generated manually for any of the remote objects.

Preferred embodiments provide a method further comprising the step of creating an object descriptor for the remote object. In some embodiments the step of creating the object descriptor for the remote object comprises the step of storing the object descriptor in a cache for later retrieval; the later retrieval being responsive to a request to create an instance of the remote object.

A distinction can be drawn, within a remote objection invocation environment, between stateless and stateful objects. Access to and invocation of instances of stateless objects can be shared among different client software, that is, a common object descriptor is sufficient for instances of a stateless object. Suitably, embodiments provide a method further comprising the step of determining whether or not an instance of the remote object has been created and in which the step of creating the object descriptor is responsive to a determination that an instance of the remote object has not been created. The cached object descriptor can be retrieved and forwarded to such clients if an object has already been instantiated thereby avoiding the need to create an new object descriptor for each instance of the object.

Preferably, embodiments provide a method further comprising the step of generating location data to facilitate location of a corresponding instance of the remote object. In preferred embodiments there is provided a method in which the step of generating the location data comprises the step of generating an identifier associated with the corresponding instance of the remote object.

To invoke a remote object, an instance of that object should preferably be created. Hence, embodiments provide a method further comprising the step of instantiating the remote object. Preferably, embodiments provide a method in which the step of instantiating the remote object is performed in response to a determination that the remote object has a predetermined characteristic. In preferred embodiments, the predetermined characteristic is that the remote object is stateless or stateful.

Stateless objects are preferably instantiated at initialisation of the system hosting them. Suitably, preferred embodiments provide a method in which the step of instantiating is performed in response to initialisation of a system hosting the remote object.

Within some remote object invocation systems, a system administrator, for example, may wish to control the instantiation and invocation of remote objects hosted by such systems. Therefore, embodiments provide a method further comprising, prior to the step of instantiating, the step of determining whether or not instantiation of the remote object is permitted and in which the step of instantiating is performed in response to determining that instantiation of the remote object is permitted.

Parameter marshalling and ordering represent a source of inflexibility of prior art remote object invocation systems. Therefore, embodiments of the present invention provide a method further comprising the step of encapsulating the remote object data within a data structure. Preferred embodiments provide a method in which the data structure is an XML file.

An aspect of embodiments of the present invention provides a remote object invocation method for invoking a method of a remote object; the method comprising the steps of introspecting the remote object to produce introspection data associated with the object; interpretatively processing the introspection data to establish a proxy object bearing an associated proxy object method corresponding to the remote object method; invoking, in response to an action of client software, the proxy object method; conveying invocation data associated with the proxy object method to the remote object; invoking, in response to the invocation data, the method of the remote object; and returning invocation result data to the client software via the proxy object.

A further aspect of embodiments of the present invention provides a remote object server hosting a remote object; the sever comprising means to generate introspection data associated with the remote object and means to output the introspection data for use by a client in interpretatively creating a proxy object using the introspection data.

A still further aspect of embodiments of the present invention provides a client comprising means for receiving introspection data associated with a remote object and an interpreter for interpretatively creating a proxy object, using the introspection data, for invocation by an application executable at the client.

A yet further aspect of embodiments of the present invention provides a computer program for implementing a method, system, client or server as described or claimed in this specification. Preferably, embodiments provide a computer program product comprising computer readable storage storing such a computer program. The term computer program encompasses a complete computer program or a part of such a computer program.

An aspect of embodiments of the present invention provides a method of invoking, from a first computer, a remote object located on a second computer, the method comprising the steps of introspecting, at the second computer, the remote object to identify at least one of a method, property and event thereof to produce introspection data that describes any such identified methods, properties and events; transmitting the introspection data, via a first transport mechanism, to the first computer; creating, at the first computer, a proxy object from the introspection data; invoking, at the first computer, a method of the proxy object; transmitting, from the first computer to the second computer, remote method invocation data, via a second transport mechanism; the remote method invocation data comprising at least an indication of the remote object and the method, property and event thereof to be invoked; receiving, at the second computer, via the second transport mechanism, the remote method invocation data, extracting, at the second computer, the remote method invocation data from the second transport data structure; invoking, at the second computer, the method, property or event of the remote object identified by the remote object invocation data; transmitting, from the second computer to the first computer, via a third transport mechanism, a return object or data representing the results of the invocation of the method, property or event of the remote object; and extracting, at the first computer, the return object or data from the third transport mechanism.

Preferably, the transport mechanisms comprise a combination of an XML file bearing the information to be conveyed and the HTTP.

Preferably, the step of creating, at the first computer, the proxy object from the introspection data comprises the step of interpretatively parsing the introspection data and interpretatively constructing the proxy object. Therefore, due to the use of an interpreted language on the client side, the remote object descriptors do not need to be produced manually or compiled into remote proxies, but rather the client can dynamically produce these objects at run time.

In embodiments of the present invention, the combination of server side introspection and the use of an interpreter or an interpreted language on the client side for proxy construction provides a conceptually simpler distributing computing environment as compared with the prior art.

### Brief Description of the Drawings

Embodiments of the present invention will now be described, by way of example only, with reference to the accompanying drawings in which:
figure 1 illustrates the CORBA in accordance with the prior art;
figure 2 shows schematically a dynamic remote object protocol architecture in accordance with an embodiment of the present invention;
figure 3 shows in greater detail the use of a dynamic remote object protocol in accordance with an embodiment of the present invention;
figure 4 illustrates invocation of stateless remote objects in accordance with an embodiment;
figure 5 illustrates invocation of stateful objects in accordance with an embodiment;
figure 6 illustrates a first application of an embodiment of the present invention;
figure 7 shows a flowchart of the data processing undertaken by an embodiment of the present invention to initialise or render a remote object useable;
figure 8 depicts a flowchart of the invocation of a remote object;
figure 9 illustrates a flowchart for the creation of a stateful remote object; and
figure 10 shows a flowchart of the invocation of the stateful remote object.

### Description of the Preferred Embodiments

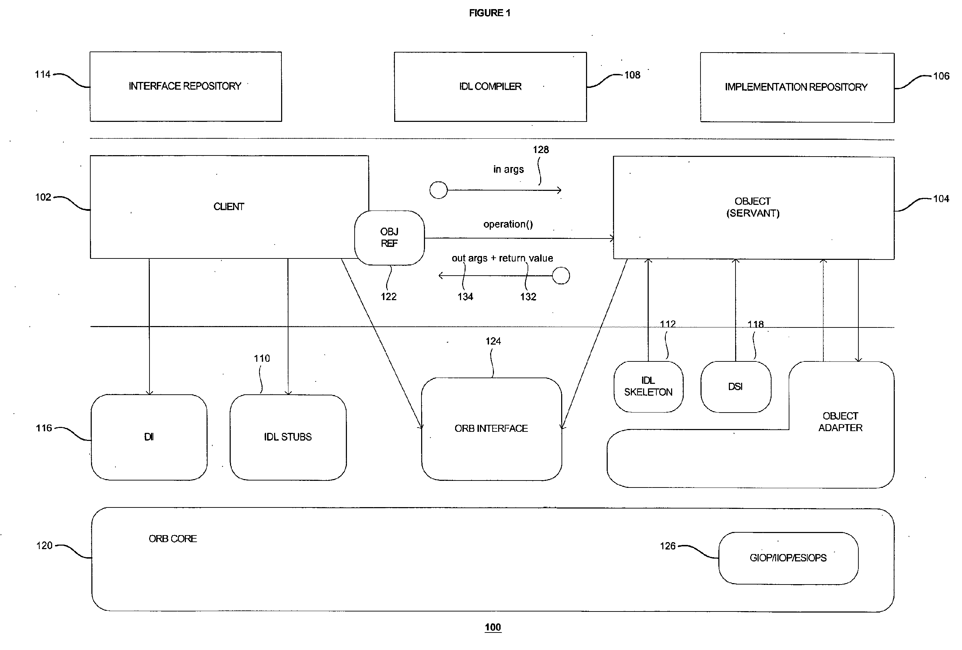

Referring to figure 1, there is shown, schematically, an example of distributed object computing architecture 100. The architecture 100 reflects the Common Object Request Broker Architecture (CORBA) in accordance with the prior art. CORBA is an emerging open distributed object computing infrastructure that has been standardised by the Object Management Group (OMG) as is well known within the art. CORBA automates many common network programming tasks, which, as described above, include object registration, object location and activation; request demultiplexing; framing and error-handling; parameter marshalling and demarshalling; and operation despatching.

It can be appreciated that the architecture comprises a client 102 that obtains references to objects and invokes operations on them to perform specific tasks in response to requests from an application (not shown). The objects may be local objects, that is, they may be stored within the client or on an associated HDD (not shown). Alternatively, the objects may be remote objects that are held by, or accessible via, a server 104. Clients access remote objects as they would a local object.

Figure 1 illustrates how the underlying object request broker components transmit remote operation requests and receive remote operation result data transparently between the client and a remote object.

The architecture 100 comprises an implementation repository 106, which stores a number of remote objects that are accessible by the client. An interface description language compiler 108 processes each of the objects (not shown) contained within the implementation repository 106 to produce corresponding IDL stubs and skeletons in a prescribed language such as, for example, C++ or Java. In addition to providing programming language transparency, the IDL compiler 108 aims to eliminate common sources of network programming errors and to provide opportunities for automated compiler optimisations. The IDL compiler transforms the objects, or at least the object definitions contained within the implementation repository, into corresponding IDL stubs 110 and skeletons 112.

On the client side, the IDL stubs 110 are stored within an interface repository 114. The client uses the IDL stubs when invoking a corresponding remote object.

In response to a request to invoke a remote object, a dynamic invocation interface 116 allows the client 102 to generate both synchronous and asynchronous remote object invocation requests. A dynamic skeleton interface 118 is a server-side counterpart of the client-side dynamic invocation interface 116. The dynamic skeleton interface 118 allows the object request broker to deliver requests to a servant object 104 even though no compile-time knowledge of the IDL interface is provided. In effect, clients issuing requests do not need to concern themselves with whether or not the server object request broker uses static or dynamic skeletons. Similarly, servers do not need to concern themselves with whether not a client uses dynamic or static invocation interfaces.

The IDL stubs and skeletons serve as the "glue" between the client 102, the servant 104 and the object request broker 120. The IDL stubs 110 implement a strongly-typed static invocation interface, which collates application parameters into a common message-level representation to assist the exchange of those parameters between the client 102 and server 104. It will be appreciated that the IDL skeletons 112 implement the converse operation.

Each object is defined and accessed via an object reference 122, which associates, with that object, one or more paths via which the client 102 can access a server-side object.

The object or servant 104 implements operations defined by an OMG IDL interface stored in the implementation repository 106. It will be appreciated that the client 102 never interacts directly with the remote objects. Their interaction is always via object references.

Supporting the exchange between the client 102 and the server 104 is the object request broker (ORB) core 120; the functionality of which is accessed by an object request broker interface 124. It will be appreciated that when a client invokes an operation on an object, the ORB core 120 is responsible for delivering that invocation request to the object and for returning a response, if any, to the client 102. Typically, the ORB core 120 is implemented as a run-time library that is linked into client and server applications. Preferably, for objects executing remotely, a CORBA-compliant ORB core communicates via a version of a general inter-ORB protocol (GIOP), such as, for example, the Internet inter-ORB protocol (IIOP), which runs on top of the typically present TCP/IP protocol 126.

The ORB interface 124 is an abstraction that allows applications to be decoupled from implementation detail. The ORB interface 124 provides standard operations to initialise and shutdown the ORB core 120, to convert object references to strings and visa versa and to create argument lists for requests issued via the dynamic invocation interface 116.

Additionally, the implementation repository 106 comprises data that allows an ORB to activate servers to process so-called servants. It will be appreciated that the majority of the data contained within the implementation repository 106 is specific to an ORB or an operating system environment.

It can be appreciated from the above that there is a need to define the objects via an OMG interface definition language interface, to compile IDL stubs and skeletons using an IDL compiler 108, and to store the resulting IDL stubs 110 and skeletons 112 so that they may be used by an application such as, for example, client 102.

It can be seen that, upon invocation of an object, the parameter list of in-arguments 128 is forwarded to the remote object together with an indication of that remote object 130. It can be appreciated in the example given that the remote object is represented by "*operation()*". The object return value 132 and associated output arguments 134 are returned from the server 104 to the client 102 in the conventional manner.

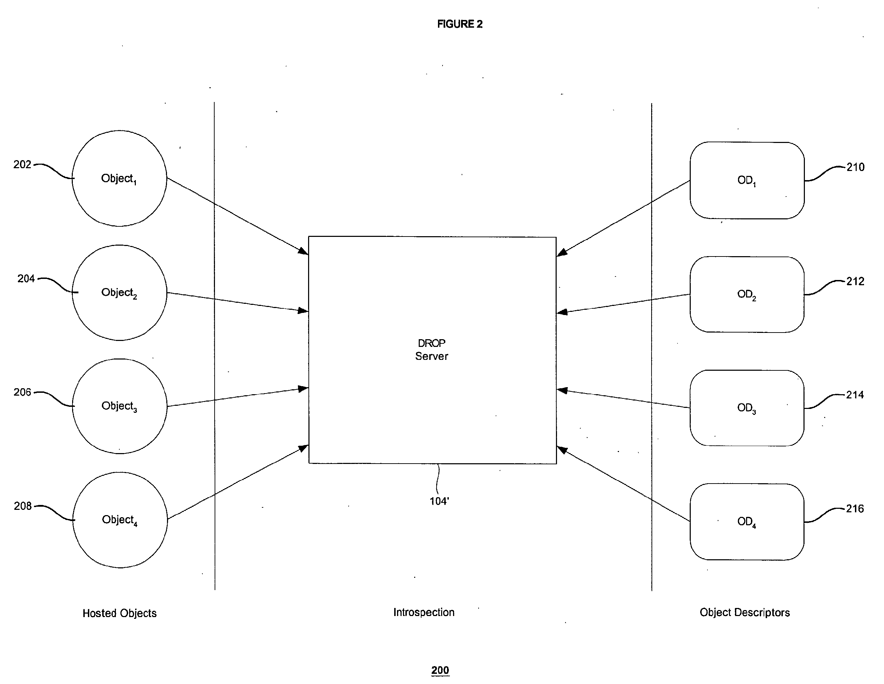

Referring to figure 2, there is schematically shown a dynamic remote object protocol (DROP) or system 200 comprising a dynamic remote object protocol server 104' which processes a number of hosted objects 202 to 208 via introspection, as is known within a Java context, to produce corresponding object descriptors 210 to 216 respectively. The introspection data represents an embodiment of remote object data. The process of introspection carried out by the dynamic remote object protocol server 104' examines each of the hosted objects 202 to 208 to identify, preferably all of, the methods, properties and events of those objects 202 to 208. Each of the object descriptors 210 to 216 contains an indication of the methods, properties and events of a corresponding hosted object 202 to 208 from which it was derived. It will be appreciated that due to the nature of languages such as Java, the process of introspection can be carried out at run-time. Hence, the object descriptors 210 to 216 should always represent the most up to-date interface description of the corresponding hosted objects 202 to 208. The use of introspection advantageously removes the need to produce manually an IDL compiled interface description as within CORBA. It can be appreciated that the run-time introspection provides significant flexibility over the pre-compiled interface description language definitions that are used in the prior art.

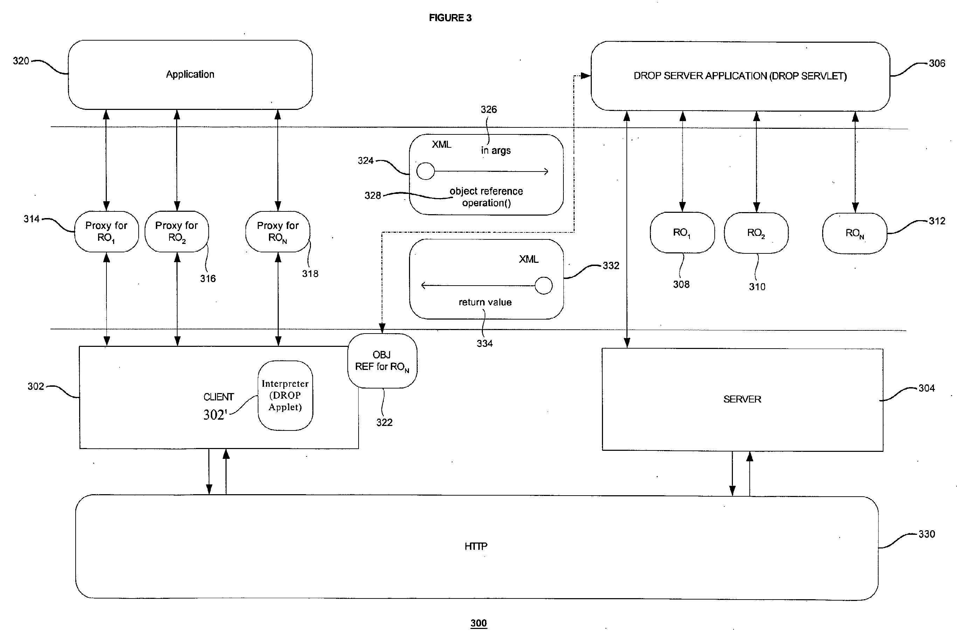

Referring to figure 3 there is shown, in greater detail, a dynamic remote object protocol or architecture 300 in accordance with an embodiment of the present invention. The architecture 300 comprises a client 302 and a server 304. The server 304 executes a dynamic remote object protocol server application or servlet 306 that manages remote invocation requests and directs those remote object invocation requests to appropriate or corresponding remote objects or object instances 308, 310 and 312. The remote objects 308 to 312 may be stored in either volatile or non-volatile storage (not shown) associated with the server 304.

When the server starts up, the process of introspection as described above with reference to figure 2, creates object descriptors for each of the stateless remote objects 308 to 312. When a client references one of these remote objects, it will make use of the appropriate object descriptor to produce a corresponding proxy object 314, 316 and 318 for each of the remote objects 308, 310 and 312 respectively. More specifically, the objects descriptors are read by the client host environment, comprising an interpreter 302, and used to create appropriate client side proxy objects. The proxy objects 314 to 318 can be invoked in the conventional manner via software, such as, for example, an application 320 that executes at the client machine 302.

As described above, each of the proxy objects 314 to 318 has an associated object reference. An object reference 322 for remote object RO_{N} 312 is illustrated. The remote object reference 322 is used by the client 302 to identify the remote object of interest to the dynamic remote object protocol server application 306, that is, the remote object for which an invocation request has been received from the application 320. Data relating to the remote object invocation request received from the application 320 together with an identifier for the method of the remote object to be invoked and the associated parameters are transmitted to the dynamic remote object server application 306 from the client 302 in an XML file 324. It can be seen in the illustrated embodiment that the parameters are described as "in-args" 326, the object reference and the method of the remote object RO_{N} 312 to be invoked are identified via the identifier *operation()* 328.

The XML file 324 is carried by the HTTP 330. The use of an XML file 324 and the HTTP protocol 330 provides significant flexibility in remotely invoking an object. In particular, the activities of parameter marshalling and demarshalling as well as the order of presentation of those parameters, that is, the in-args 326, are significantly simplified as compared to the prior art.

The results of the remote object invocation are transferred from the dynamic remote object protocol server to the client 302 via an appropriate transport data structure 332. Preferably, the transport data structure 332 is an XML file that contains the invocation result data, preferably in the form of a return value or return object 334, produced by the method invocation. Again, it will be appreciated that the XML file 332 is transferred using the HTTP protocol 330.

Upon receipt of the XML file 332, the client 302 extracts the data contained therein and forwards that data, via the appropriate proxy object 314, 316 or 318, for subsequent output to the application 320.

It will be appreciated that the conventional prior art steps of defining a remote object interface using some form of grammar or interface description language using such a definition to generate client stubs and server skeletons and then leaving the developer to integrate these with the client and server side application code represents a significant problem in the event that the interface to the remote object changes. In response to such a change, a developer must re-generate the stubs and skeletons, re-write the server application to integrate the changes in the skeletons and re-compile and re-deploy clients which use updated stub code.

It will be appreciated by those skilled in the art that a significant advantage of embodiments of the present invention is that the need to define an IDL and associated skeletons explicitly is eliminated. Stubs are still provided in the form of proxy objects. However, stubs according to the embodiments of the present invention do not require re-compilation and re-deployment in the event of a change to the interface of a remote object, as they are dynamically generated by the client. The need for an IDL is eliminated by using introspection to discover an object interface dynamically. The dynamically discovered interface is transmitted to the client, which dynamically or interpretatively creates, using the interpreter 302', a proxy object of the server-side object that can be used in subsequent invocations.

It will be appreciated that whenever a client issues a request to receive a reference to a remote object, the server application 306 returns an object descriptor to the client. The object descriptor is parsed by the client and, since the client runs in the context of an interpreted language, proxy objects representing the remote objects can be constructed at run-time from the object descriptors. These run-time generated client-side proxy objects emulate the exposed functionality of their server-side equivalents. The proxy object serves as a local representative for the server-side remote object and accepts requests from the application 320 for method invocations and returns the result of any such method invocations received from the server.

Preferably, embodiments of the present invention support both stateful and stateless objects. An object is classified as being stateful or stateless according to whether or not the same object, or at least the same instance of an object, is accessible by a number of clients or whether each client has their own instances of a remote object respectively. Whether or not a remote object is stateless or stateful determines when the remotely accessible objects should preferably be introspected.

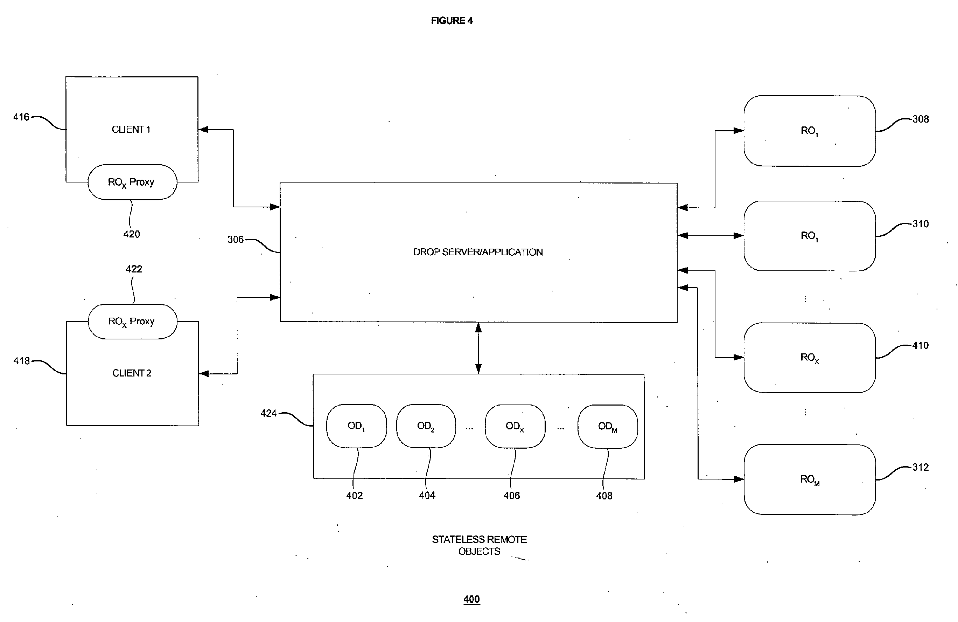

Referring to figure 4 there is shown schematically a portion 400 of the server-side element of the embodiment shown in figure 3 for the creation of stateless objects. It can be appreciated that the dynamic remote object protocol server/application 306 co-ordinates the operations for the creation and use of stateless remote objects.

Object descriptors 402 to 408 are produced for corresponding remote object instances 308 to 312 and 410. An object instance implies a copy of the particular object along with its associated state. In the case of stateless objects, there may only be one object instance per object type. It can be appreciated in the example shown that there is only one remote object instance RO_{X}, 410, despite the fact that first 416 and second 418 client machines have loaded applications that both require access to the remote object 410. It can be seen that each of the client machines 416 and 418 has an instance or proxy object representation 420 and 422 respectively of the remote object 410, RO_{X}. Each of the proxy objects 420 and 422 uses the same object reference to invoke methods of the remote object 410. It will be appreciated that the changes to state data associated with the remote object 410 caused by invocations by client 416 will also be visible to the client 418 and visa versa.

Stateless objects are typically used to perform operations that are independent of the client accessing them. An example may be an object that is responsible for validating credit card numbers.

It will be appreciated that even though a single instance of a stateless object could be used to serve all clients, in practice embodiments of the present invention utilise a pool of stateless objects to ensure that any imposed performance criteria are met.

When the dynamic remote object protocol server/application 306 initialises, configuration data (not shown) is read, which contains the names of all stateless objects that should be made available to remote clients. At least one instance of each such stateless object 308, 310, 312 and 410 is created. Each of the newly created stateless objects 308, 310, 312 and 410 are introspected to produce the corresponding object descriptors 402, 404, 406, 408. The object descriptors are stored within locally accessible storage 424 for ease of reference and subsequent transmission to those clients that require them.

The object descriptors 402 to 408 are downloaded to clients to allow clients, such as the first and second clients 416 and 418 respectively, to construct proxy objects 420 and 422 for the remote objects. It can be appreciated from figure 4 that both clients have obtained a reference to the same stateless object, that is, remote object 410. Since the remote object 410 is stateless, both clients will be able to communicate, or interact, with the same object instance.

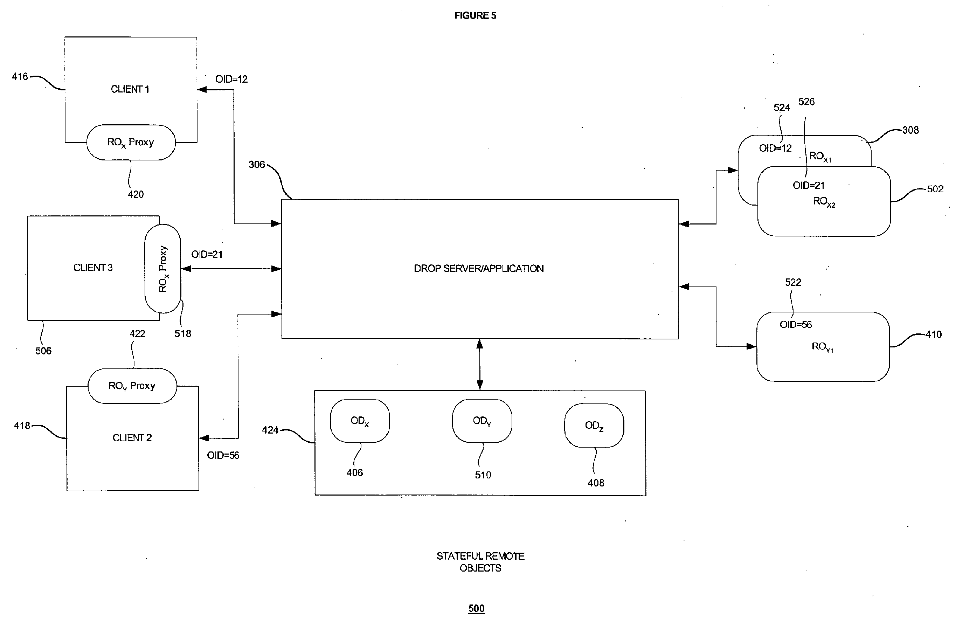

Figure 5 shows an example 500 of the creation and use of stateful objects. The DROP server/application 306, again, reads a configuration file (not shown) containing the names of the stateful objects supported by the server. This time, the configuration data is not used to instantiate and introspect objects but merely identifies objects supported by the server. Object instantiation and introspection take place only when required.

After the initialisation of the server, instances of the objects 308, 410 and 502 do not exist. They are only instantiated as required by clients 416, 418 and 506. Again, for each of the remote objects 308, 410 and 502 corresponding object descriptors 406, 510 and 408 are stored in the storage region 424 of the server (not shown). Preferably, the storage 424 is non-volatile.

Preferably, object descriptors are only created as required. Thus, the object descriptor 406 that was created for the remote object instance 308 will be reused for the remote object instance 502 given that the object type is the same.

It can be appreciated from figure 5 that the first client 416 has instructed the server to create the remote object 308. The first client 416 has then created an associated remote object proxy 420 for the newly created remote object ROₓ₁ 308. The information provided by the object descriptor OD_{X} 406 was used to construct this proxy 420.

The second client 418 has instructed the server to create a different type of remote object RO_{Y1} 410. The second client 418 has then created a corresponding proxy 518 from the information in object descriptor 510 OD_{Y}.

The third client 506 has instructed the server to create a remote object 502 of the same type as that created for object 308. The third client 506 has then created a remote object proxy 422 using the information provided by the object descriptor OD_{X} 406.

Note that clients 1 and 3 either share or use an equivalent proxy object (RO_{X} Proxy). However, the remote object proxy 518 of the third client 506 has a different object identifier as compared to the object identifier used by the remote object proxy 420 for the first client 416. It can be appreciated that there are two instances of the remote objects, RO_{X1} and RO_{X2}, that have remote object identifiers OID=12 and OID=21 respectively. It can also be appreciated that the remaining remote objects have associated remote object identifiers such as identifier 522.

Preferably, stateful objects are instantiated on demand. Furthermore, it may not be necessary to introspect stateful objects each time they are instantiated as it is unlikely that the stateful object will have changed in the time between initialisation of the dynamic remote object protocol server/application 306 and the use of the stateful objects by an application running on one of the client machines 416, 418 or 506. The object identifiers 522 to 526 are used by the dynamic remote object protocol server/application 306 to direct method invocations invoked on the proxy objects 420, 422 and 518 to corresponding instances of the remote objects.

Preferably, the dynamic remote object protocol server/application 306 maintains a cache (not shown) of object descriptors for remote objects that have already been introspected. Therefore, if a request is received from a client to create a new instance of an object for which an object descriptor has already been cached, the dynamic remote object protocol server/application 306 could merely instantiate a new copy of the object and return the previously cached object descriptor. This avoids the need for further introspection.

When a client requests the creation of a new stateful object, the dynamic remote object protocol server/application 306 determines whether or not introspection has already been performed for that object. If introspection has already been performed, a corresponding object descriptor will already exist. However, if introspection has not been performed already, the dynamic remote object protocol server/application 306 instigates introspection of the object identified in the request to produce an associated object descriptor. The newly created object also receives an assigned unique object identifier. The object descriptor and the unique object identifier are returned to the client that requested the instantiation of the object for use in subsequent invocations. Therefore, using the object identifier, the dynamic remote object protocol server/application 306 can locate the method to be invoked of the correct or appropriate instance of the object.

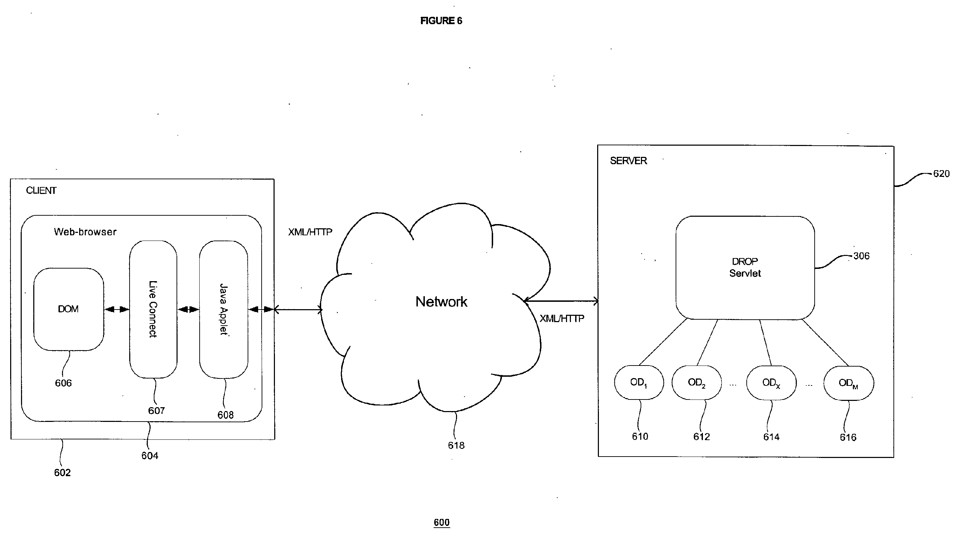

Referring to figure 6 there is shown an example of a system 600 that uses embodiments of the present invention to support communication between JavaScript clients, running in the context of a web browser, and server-side Java objects. It can be appreciated from figure 6 that the system 600 comprises a client 602 running a browser 604. The browser 604 hosts a document 606, which complies with the Document Object Model standard. As is known within the art, the behaviour of the document object can be modified using JavaScript and by invoking remote objects. The modifications to the document 606 are realised using, for example, LiveConnect 607 running under the control of a Java applet 608. The Java applet 608, using an XML file and the HTTP transport protocol, can service requests made by the document 606 for invocation of one of a number of remote objects 610 to 616 via a network 618 and a server 620 that is running the dynamic remote object protocol application 306. The Java applet 608, Netscape LiveConnect and JavaScript enable a bridge to be realised between the Document Object Model 606 of the browser 604 and the server. Suitably, the document 606 can invoke methods of the remote objects 610 to 616. The document 606 can be altered in light of, or can use, the results of any such method invocations. Accordingly, the web page displayed by the web browser 606, which is a reflection of the document 606, will be updated accordingly.

It will be appreciated that the conventional manner of updating a web page in response to processing results performed at a server is to refresh an entire HTML page using a new web page generated by a web server. However, embodiments of the present invention allow web pages to be updated in response to remote action.

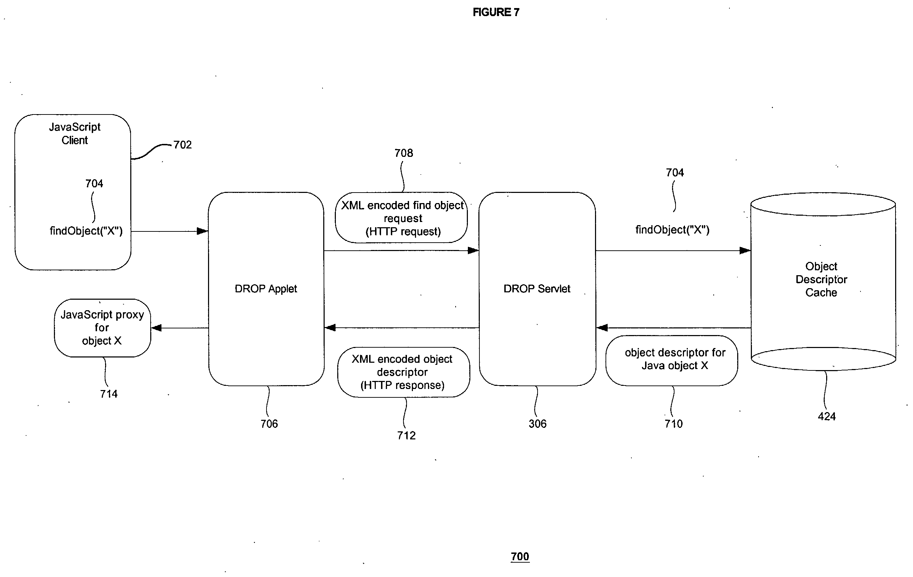

Referring to figure 7, there is shown a data flowchart 700 that depicts the data exchange between various elements of an embodiment of the present invention to allow a JavaScript client 702 to find an object, X, using a *findObject* method 704. The execution, or more accurately, interpretation and invocation, of the *findObject* method 704, causes a dynamic remote object protocol applet 706, which runs on top of the client 302 but underneath the application 320 (which corresponds to the JavaScript client 702), to encapsulate the *findObject* method request within an XML file 708. The XML file 708 is transmitted, via the HTTP 330, to the server, or, more accurately, to the dynamic remote object protocol server or servlet 306. The dynamic remote object protocol servlet 306 invokes the function *findObject*("X") 704 to locate and retrieve the object descriptor for the object X from an object descriptor cache 424 as described above with reference to figures 4 and 5.

Assuming the object descriptor is contained within the object descriptor cache 424, the object descriptor 710 is returned from the object descriptor cache 424 to the dynamic remote object protocol servlet 306. The object descriptor 710 for the object X is encapsulated within an XML file 712 and transmitted to the dynamic remote object protocol applet 706. The dynamic remote object protocol applet 706 creates a JavaScript proxy object 714 for remote object X from the object descriptor 710 extracted from the XML file 712. It will be appreciated that the methods, properties and events of the remote object X can now be locally invoked using the JavaScript proxy object 714 for the remote object X.

One skilled in the art will appreciate that the JavaScript client obtains a reference to the object X by invoking a command such as
obj = document.applets.drop.findObject("com.hp.cii.Test");

It will be appreciated that this command will execute the *findObject* method in the DROP applet, which sends the XML message or file 708 to the DROP servlet 306 running at the server. The XML file or message 708 simply contains a request to obtain a reference to and a description of the named object. The dynamic remote object protocol servlet 306 will seek to identify a corresponding object descriptor for the object "com.hp.cii.TestObject" and return it, in XML format, to the dynamic remote object protocol applet 706.

As described above, since the DROP applet 706 is interpretative, the dynamic remote object protocol applet 706 will parse the returned object descriptor 710 and construct, at run time, a JavaScript proxy object 714 that has methods, properties and events that are equivalent to those specified in the object descriptor 710. It will be appreciated that these methods etc. are merely proxies for the real methods etc. of the object hosted by the server. The proxy object 714 is responsible for accepting input parameters of any invocation of a method of that proxy object 714 and converting those input parameters into an XML format, which can be understood by the dynamic remote object protocol servlet 306. It will use facilities provided by the DROP applet to assist it in this task.

It will be appreciated by those skilled in the art that the conversion from a method invocation with associated parameters into a valid XML format may be undertaken using SOAP or XML-RPC as is known within the art. Furthermore, as a significant amount of the processing involved in converting a method call and associated parameters into an XML file (and back again) is common to all proxy objects, the dynamic remote object protocol applet preferably contains helper methods that are directed to achieving this aim. The helper methods reduce, significantly, the amount of JavaScript code that needs to be generated by the dynamic remote object protocol applet 706 when producing proxy objects. This results in a much faster implementation as most of the encoding work is performed natively in Java.

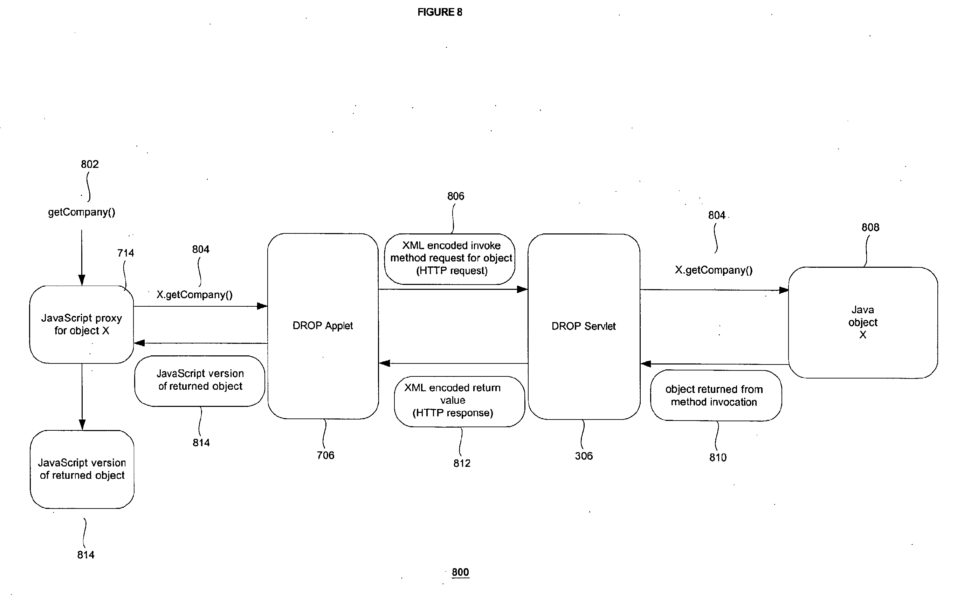

Referring to figure 8, there is shown a flowchart 800 of the invocation of a function or method *getCompany()* 802 using the JavaScript proxy object 714 for a remote object, X, (not shown). The JavaScript proxy object 714 identifies the object, X, and the method to be invoked to the dynamic remote of object protocol applet 706, via X.getCompany() 804, having checked to ensure that the parameters supplied were in the correct format. The dynamic remote object protocol applet 706 creates an XML file 806 that contains the method invocation request and associated parameters. The XML file 806 is transmitted, via HTTP, to the DROP servlet 306. The DROP servlet 306 parses the XML file 806 and invokes the method *getcompany()* of the remote Java object X 808. The invocation of that method is performed using the parameters that were initially supplied to the JavaScript proxy object 714 for the Java object X 808. The dynamic remote object servlet 306 receives the object 810 returned from the method invocation, that is, the results of the method invocation, and converts the returned object 810 into a corresponding XML file 812. The dynamic remote object protocol servlet 306 transmits that XML file 812 to the dynamic remote object protocol applet 706.

Upon receiving the XML file 812, the DROP applet 706 parses that file and dynamically creates a JavaScript version 814 of the returned object using direct access to the browser's document object model 606 that is provided by LiveConnect. The newly created JavaScript version of the returned object 814 is returned as a result of the function call or method invocation on the JavaScript proxy object 714 for remote object X 808. It can be appreciated from the above that the invocation of stateless remote objects as described above represents an elegant solution and uses the ubiquitous HTTP protocol as a transport protocol and XML files as a transport mechanism.

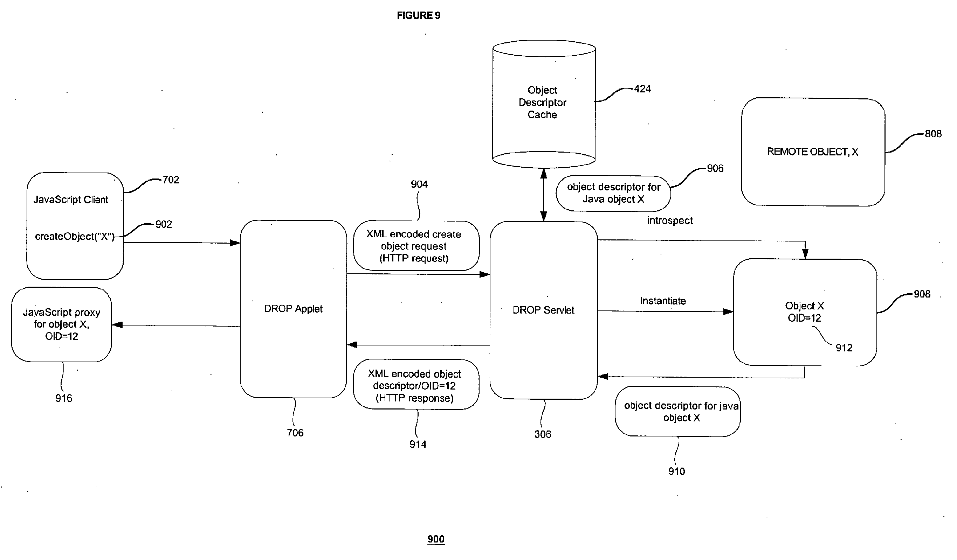

To obtain a reference to a stateful object the processing shown in the flowchart 900 of figure 9 may be undertaken. To obtain a reference to a stateful object the JavaScript client 702 may first instruct the DROP servlet 306 to instantiate a new instance of the remote object 808. Since the instantiated object 808 is stateful, it will only be accessible by the JavaScript client 702 that created it. Furthermore, it will be destroyed when the JavaScript client 702 terminates its HTTP session. The JavaScript client 702 creates the new instance of the stateful object 808 on the server by invoking a command such as:
obj = document.applet.drop.createObject("com.hp.cii.Test Object");

The command 902 *createObject("X")* will cause the DROP applet 706 to send an XML file (or message) 904 to the DROP servlet 306 running on the server. The XML file 904 contains a request for the server to instantiate a new version of the named object, X 808.

Preferably, the dynamic remote object protocol servlet 306 checks to ensure that the named object, X, is enabled for remote use since it is desirable that a server will not instantiate Java objects indiscriminately. Furthermore, the server or the DROP servlet 306 may have imposed a limit on the number of instantiations of the remote object 808. This may be particularly the case for remote objects that require or consume a large amount of local resources.

Having checked to ensure that the stateful object 808 can be instantiated, the dynamic remote object protocol servlet 306 attempts to identify a corresponding object descriptor for object X in the object descriptor cache 424. If the object descriptor is located within the object descriptor cache 424, that object descriptor 906 is returned to the dynamic remote object protocol servlet 306.

However, if the DROP servlet 306 determines that the object descriptor cache 424 does not contain an object descriptor for the remote object 808, the DROP servlet 306 creates a new instance 908 of the remote object 808. Introspection is performed on the newly instantiated object 908 to produce a corresponding object descriptor 910. Furthermore, the newly instantiated object 908 is assigned an object identifier 912. In the present example, the object identifier, OID, is assigned the number 12. The object descriptor and the object identifier of the newly instantiated object 908 are encapsulated within an XML file 914 and transmitted, via the HTTP, to the dynamic remote object protocol applet 706.

Preferably, the object identifier is a combination of a client session ID and a current value of an object counter (not shown) that is incremented after each stateful object instantiation.

The DROP applet 706 parses the returned object descriptor to construct a JavaScript proxy object 916 for the newly instantiated instance 908 of remote object X 808. The JavaScript proxy object 916 contains the unique object identifier 912 to allow the appropriate instance 908 of the remote object X 808 to be identified in any subsequent method invocations of the instance 908 of the remote object 808.

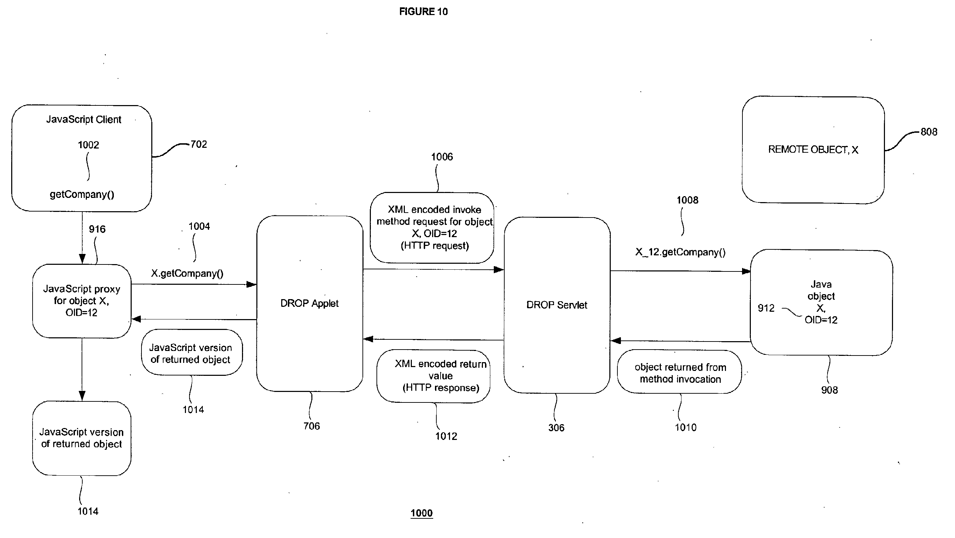

Referring to figure 10 there is shown a flowchart 1000 that depicts the flow of data during the remote invocation of the stateful instance 908 of the remote object X 808. Having instantiated an instance 908 of the remote object 808 by following the flowchart shown in figure 9, all interactions with the instance 908 of the remote object can be effected as if they were normal method calls on a local JavaScript object. For example, the command:
company = obj.getCompany("HP");
could be used to invoke the *getCompany* method 1002 on the JavaScript proxy object 916. The method invocation 1004 is passed to the DROP applet 706, which parses that invocation 1004 into an XML file 1006 that contains the method invocation request for the instance 908 of the remote object 808 together with the object identifier for the instance 908 of the remote object 808.

The XML file 1006 is transmitted to the DROP servlet 306. Upon receipt of the XML file 1006, the dynamic remote object protocol servlet 306 invokes the identified method *getCompany()* 1004 on the instance 908 of the remote object 808 that has the appropriate object identifier 912 using an appropriate invocation 1008.

The object 1010 that is returned as a consequence of the invocation 1008 of the *getCompany()* 1004 method is parsed by the DROP servlet 306 to produce a corresponding XML file 1012. The XML file 1012 is transmitted, via the HTTP, to the dynamic remote object applet 706. The dynamic remote object applet 706 produces a JavaScript version of the returned object 1014. The returned object 1014 is fed back to the JavaScript client 702 or some other application (not shown) as is appropriate.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings) and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A remote object invocation method for invoking a method of a remote object; the method comprising the steps of
producing remote object data associated with the remote object;
interpretatively establishing a proxy object using the remote object data; the proxy object bearing an associated proxy method corresponding to the method of remote object;
invoking, in response to an action of client software, the proxy object method;
conveying invocation data associated with the invocation of the proxy method to the remote object;
invoking, in response to the invocation data, the method of the remote object; and
returning invocation result data to the client software via the proxy object.

2. A remote objection invocation method as claimed in claim 1 in which the step of producing the remote object data comprises the step of introspecting the remote object to produce introspection data and in which the remote object method data comprises the introspection data produced by said introspecting.

3. A method as claimed in any preceding claim further comprising the step of creating an object descriptor for the remote object.

4. A method as claimed in claim 3, in which the step of creating the object descriptor for the remote object comprises the step of storing the object descriptor in a cache for later retrieval; the later retrieval being responsive to a request to create an instance of the remote object.

5. A method as claimed in either of claims 3 and 4, further comprising the step of determining whether or not an instance of the remote object has been created and in which the step of creating the object descriptor is responsive to a determination that an instance of the remote object has not been created.

6. A method as claimed in any preceding claim, further comprising the step of generating location data to facilitate location of a corresponding instance of the remote object.

7. A method as claimed in claim 6 in which the step of generating the location data comprises the step of generating an identifier associated with the corresponding instance of the remote object.

8. A method as claimed in any preceding claim, further comprising the step of instantiating the remote object.

9. A method as claimed in claim 8 in which the step of instantiating the remote object is performed in response to a determination that the remote object has a predetermined characteristic.

10. A method as claimed in claim 9 in which the predetermined characteristic is that the remote object is stateless.

11. A method as claimed in claim 9 in which the predetermined characteristic is that the remote object is stateful.

12. A method as claimed in any of claims 8 to 11 in which the step of instantiating is performed in response to initialisation of a system hosting the remote object.

13. A method as claimed in any of claims 8 to 12, further comprising, prior to the step of instantiating, the step of determining whether or not remote object is permitted to be instantiated and in which the step of instantiating is performed in response to determining that the remote object is permitted to be instantiated.

14. A method as claimed in any preceding claim, further comprising the step of encapsulating the remote object data within a data structure.

15. A method as claimed in claim 14 in which the data structure is an XML file.

16. A remote object invocation method for invoking a method of a remote object; the method comprising the steps of introspecting the remote object to produce introspection data associated with the method; interpretatively processing the introspection data to establish a proxy object bearing an associated proxy method for the remote object method; invoking, in response to an action of client software, the proxy object method; conveying invocation data associated with the proxy object method to the remote object; invoking, in response to the invocation data, the method of the remote object; and returning invocation result data to the client software via the object proxy.

17. A method of invoking, from a first computer, a remote object located on a second computer, the method comprising the steps of introspecting, at the second computer, the remote object to identify at least one of a method, property and event thereof to produce introspection data that describes any such identified methods, properties and events; transmitting the introspection data, via a first transport mechanism, to the first computer; creating, at the first computer, a proxy object from the introspection data; invoking, at the first computer, a method of the proxy object; transmitting, from the first computer to the second computer, remote method invocation data, via a second transport mechanism; the remote method invocation data comprising at least an indication of the remote object and the method, property and event thereof to be invoked; receiving, at the second computer, via the second transport mechanism, the remote method invocation data, extracting, at the second computer, the remote method invocation data from the second transport data structure; invoking, at the second computer, the method, property or event of the remote object identified by the remote object invocation data; transmitting, from the second computer to the first computer, via a third transport mechanism, a return object or data representing the results of the invocation of the method, property or event of the remote object; and extracting, at the first computer, the return object or data from the third transport mechanism.

18. A method as claimed in claim 17 in which the transport mechanisms comprises a combination of an XML file bearing the information to be conveyed and the HTTP.

19. A method as claimed in either of claims 17 and 18 in which the step of creating, at the first computer, the proxy object from the introspection data comprises the step of interpretatively parsing the introspection data and interpretatively constructing the proxy object.

20. A system for implementing a method as claimed in any preceding claim.

21. A remote object server hosting a remote object; the sever comprising means to generate introspection data associated with the remote object and means to output the introspection data for use by a client in interpretatively creating a proxy object using the introspection data.

22. A client comprising means for receiving introspection data associated with a remote object and an interpreter for interpretatively creating a proxy object, using the introspection data, for invocation by an application executable at the client.

23. A computer program for implementing a method or system as claimed in any preceding claim.

24. A computer program product comprising computer readable storage storing a computer program as claimed in claim 23.
